# EUROPÄISCHE PATENTSCHRIFT

(11) **EP 2 126 539 B1**
(45) Veröffentlichungstag und Bekanntmachung des Hinweises auf die Patenterteilung: **30.08.2017**
(21) Anmeldenummer: 08707232.8
(22) Anmeldetag: 24.01.2008
(51) Int. Cl.: F02B 37/00, F02B 39/16, G01M 15/14

(54) **VERFAHREN UND VORRICHTUNG ZUM TESTEN EINES TURBOMOTORS**
METHOD AND DEVICE FOR TESTING A TURBO ENGINE
PROCÉDÉ ET DISPOSITIF POUR TESTER UN TURBOMOTEUR

(30) Priorität: 03.02.2007 DE 102007005522
(43) Veröffentlichungstag der Anmeldung: 02.12.2009
(73) Patentinhaber: Bayerische Motoren Werke Aktiengesellschaft, 80809 München (DE)
(72) Erfinder: OFNER, Bernd, 85241 Hebertshausen (DE); BRANDEL, Frank, 80469 München (DE); LORENZ, Niklas, 80799 München (DE)
(74) Vertreter: Mayer-Martin, Christian
(86) Internationale Anmeldenummer: PCT/EP2008/000520
(87) Internationale Veröffentlichungsnummer: WO 2008/095610

(56) Entgegenhaltungen:
- EP-A- 0 608 676
- US-A- 4 046 003
- US-A1- 2006 196 256

## Beschreibung

Die Erfindung betrifft ein Verfahren und eine Vorrichtung zum Testen eines Turbomotors, insbesondere eines Turboladers, in einem Kraftfahrzeug und ein entsprechendes Kraftfahrzeug.

Zur Steigerung der Motorleistung von Brennkraftmaschinen werden zunehmend Abgasturbolader eingesetzt. Hierbei wird auf der Auslassseite der Brennkraftmaschine der Abgasstrom über eine Abgasturbine geleitet, die einen Verdichter auf der Einlassseite der Brennkraftmaschine antreibt.

Um einen Turbolader zu testen, ist es bekannt, den Ladedruck nach dem Verdichter zu messen. Dies setzt voraus, dass der Turbomotor im aufgeladenen Zustand, insbesondere mit einem über dem Umgebungsdruck oder sogar einem vorgegebenen Prüf-Druck liegenden Ladedruck, betrieben wird. Dies ist im regulären Fahrzeug-Betrieb nur bei hoher Motorlast der Fall. Daher ist es derzeit Praxis, bei Verdacht auf einen Defekt des Turboladers eines Turbomotors in einem Kraftfahrzeug, eine Testfahrt mit dem Kraftfahrzeug durchzuführen und insbesondere während starker Beschleunigungsphasen den Ladedruck zu messen. Insbesondere Kraftfahrzeuge mit leistungsstarken Turbomotoren müssen aber in der Regel schon auf der Autobahn gefahren werden, um eine ausreichende Beschleunigung und damit einen - für einen Test des Turboladers - ausreichenden Ladedruck realisieren zu können. Daraus ergeben sich für Werkstätten, Hersteller und letztlich die Kunden hohe Kosten für einen Test eines Turboladers.

Aus den Dokumenten US 4 046 003, EP 0 608 676 und US 2006/196256, ist bekannt, einen Turbomotor während des Stillstandes des Kraftfahrzeugs zu prüfen. Der Erfindung liegt daher die Aufgabe zu Grund einen Turbomotor, insbesondere einen Turbolader des Turbomotors, der insbesondere in einem Kraftfahrzeug verbaut ist, während des Stillstandes des Kraftfahrzeuges auf eine einfachere Weise zu testen.

Diese Aufgabe wird durch die Merkmale der unabhängigen Ansprüche gelöst. Vorteilhafte Weiterbildungen der Erfindung sind den abhängigen Ansprüchen zu entnehmen. Im Rahmen der Erfindung liegen dabei auch Weiterbildungen der unabhängigen Vorrichtungsansprüche, die den abhängigen Ansprüchen des Verfahrensanspruchs entsprechen.

Die Erfindung basiert demnach auf dem Gedanken, einen Turbomotor, insbesondere einen Turbolader des Turbomotors, dadurch zu testen, dass der in einem Kraftfahrzeug verbaute befeuerte Turbomotor bei Stillstand des Kraftfahrzeuges in einen aufgeladenen Betriebszustand gebracht wird, um dann den Ladedruck oder eine damit korrelierende Größe zu messen.

Vorzugsweise wird dazu der Wirkungsgrad des befeuerten Turbomotors, insbesondere gezielt und/oder künstlich derart verschlechtert, dass der Turbomotor im aufgeladenen Zustand betrieben wird.

Denn durch eine Verschlechterung des Wirkungsgrades des Turbomotors wird die im Kraftstoff enthaltene Energie zu einem geringeren Anteil in mechanische Energie, insbesondere Antriebsenergie, umgesetzt und zu einem größeren Anteil in Energie im Abgas, insbesondere thermische Energie, umgesetzt. Durch das energiereichere Abgas wird die Abgasturbine stärker angetrieben als im regulären Motorbetrieb bei Stillstand des Fahrzeuges und somit auch der Verdichter auf der Einlassseite stärker angetrieben, so dass der Turbomotor aufgeladen wird bzw. ein ausreichender Ladedruck erzeugt wird.

Dadurch kann ein in einem Kraftfahrzeug verbauter Turbomotor auch während des Stillstandes des Kraftfahrzeuges - insbesondere ohne zusätzlichen hardwaretechnischen Aufwand - in einen aufgeladenen Zustand gebracht werden, und dadurch über eine Messung des Ladedrucks der Turbomotor, insbesondere der Turbolader, getestet werden. Aufwändige Testvorrichtungen, die beispielsweise selbst Druck erzeugen sind nicht erforderlich.

Besonders bevorzugt ist vorgesehen, dass basierend auf dem gemessenen Ladedruck insbesondere automatisch eine Aussage über den Zustand des Turbomotors, insbesondere des Turboladers, getroffen wird, wie beispielsweise "O.K." oder "NICHT O.K.".

Vorzugsweise wird dazu der gemessene Ladedruck mit einem abgespeicherten Referenzladedruck verglichen, und beispielsweise basierend auf dem Vergleich eine Aussage über den Zustand des Turbomotors, insbesondere des Turboladers, getroffen.

Der Wirkungsgrad des Turbomotors, insbesondere eines Otto-Turbomotors, wird vorteilhafterweise dadurch verschlechtert, dass die Zündung zeitlich nach dem optimalen oder normalen Zündzeitpunkt im regulären Motorbetrieb erfolgt. Der Zündzeitpunkt wird also "nach spät verschoben".

Alternativ dazu wird der Wirkungsgrad des Turbomotors, insbesondere eines Diesel-Turbomotors, vorteilhafterweise dadurch verschlechtert, dass die Kraftstoff-Einspritzung zeitlich nach dem optimalen oder normalen Einspritzzeitpunkt im regulären Motorbetrieb erfolgt. Der Einspritzzeitpunkt wird also "nach spät verschoben".

Vorzugsweise wird der Turbomotor mit Mehrfach-Einspritzung betrieben, um einen besonders stabilen Betrieb des Motors bei spätem Zünd- und/oder Einspritzzeitpunkt zu ermöglichen.

Der Ladedruck kann während des Stillstandes des Kraftfahrzeuges dadurch weiter erhöht werden, oder - bei bestimmten Motortypen - der aufgeladene Betriebszustand überhaupt erst dadurch erreicht werden, dass - neben einer Verschlechterung des Wirkungsgrades des Motors - die Motordrehzahl gegenüber der Leerlaufdrehzahl erhöht wird, insbesondere auf eine Drehzahl größer 1000, 2000, 3000 oder 4000 Umdrehungen pro Minute.

Um den Motor trotz der genannten Maßnahmen nicht zu überhitzen, ist vorteilhafterweise vorgesehen, dass mehr Kraftstoff in zumindest einen Brennraum des Turbomotors eingespritzt wird als zur Verbrennung benötigt wird. Das Kraftstoff/Luft-Gemisch wird also angefettet. Die daraus resultierende Verdunstung des überschüssigen Kraftstoffs kann dann eine Kühlung beteiligter Motorkomponenten bewirken. Die Kühlung kann ergänzend oder alternativ durch das automatische Einschalten eines elektrischen Motor-Lüfters bewirkt werden, wenn sich der Motor in dem beschriebenen Testbetriebszustand befindet. Alternativ oder ergänzend dazu kann die Kühlung durch einen ohnehin vorhandenen Kühlwasserkreislauf intensiviert oder maximiert werden, beispielsweise durch eine entsprechende Ansteuerung der elektrischen Wasserpumpe (größere oder maximale Förderleistung) und/oder des Kennfeldthermostats (größere oder maximale Durchfluss-Öffnung).

Ist ein Turbomotor zu testen, der über einen ersten und einen zweiten Turbolader verfügt, die jeweils über eine Überbrückungsleitung, insbesondere ein Waste-Gate, überbrückbar sind, ist vorteilhafterweise vorgesehen, dass, insbesondere angesteuert durch ein Motorsteuergerät, zunächst das Waste-Gate des ersten Turboladers geschlossen wird und das Waste-Gate des zweiten Turboladers geöffnet wird, um einen ersten Ladedruck zu messen, und dann das Waste-Gate des ersten Turboladers geöffnet wird und das Waste-Gate des zweiten Turboladers geschlossen wird, um einen zweiten Ladedruck zu messen. Basierend auf dem ersten und/oder zweiten Ladedruck kann dann aufgelöst nach erstem und zweitem Turbolader der Zustand der Turbolader einzeln beurteilt werden. Der erste Ladedruck repräsentiert dabei den Zustand des ersten Turboladers und der zweite Ladedruck repräsentiert dabei den Zustand des zweiten Turboladers. Dazu können erster und zweiter Ladedruck miteinander verglichen werden, und/oder erster und zweiter Ladedruck jeweils mit einem Referenzladedruck verglichen werden. Alternativ oder ergänzend dazu können auch, insbesondere in einem ersten Schritt beide Waste-Gates geschlossen werden, um insbesondere zunächst einen Gesamtladedruck zu messen. Erst wenn eine Überprüfung des Gesamtladedrucks auf einen Defekt hinweist, kann in weiteren Schritten die oben beschriebene Untersuchung aufgelöst nach erstem und zweitem Turbolader durchgeführt werden. Dieses Vorgehen ist auch bei einem Turbomotor mit Stufenaufladung oder sequentieller Aufladung vorteilhaft.

Im Rahmen der Erfindung liegt auch ein Kraftfahrzeug mit einem Turbomotor, mit einer Druck-Erfassungseinrichtung zum Messen des Ladedrucks des Turbomotors und mit einem Motorsteuergerät, das derart eingerichtet ist, dass in einem Testbetriebszustand der Wirkungsgrad des Turbomotors im Stillstand des Kraftfahrzeuges derart verschlechtert wird, dass der Turbomotor im aufgeladenen Zustand betrieben wird.

Vorzugsweise ist zudem - innerhalb oder außerhalb des Kraftfahrzeuges - eine Ausgabeeinrichtung zur Ausgabe von Informationen und eine Steuereinrichtung, beispielsweise ein Motorsteuergerät oder ein anderes fahrzeuginternes oder fahrzeugexternes Steuergerät, vorgesehen, das derart eingerichtet ist, dass auf dem gemessenen Ladedruck basierende Informationen, insbesondere der gemessene Ladedruck oder der Zustand des Turbomotors oder des Turboladers, an der Ausgabeeinrichtung optisch oder akustisch ausgegeben werden.

Dazu können beispielsweise der gemessene Ladedruck mit einem - in einer der Steuereinrichtung zugeordneten Speichereinrichtung - abgespeicherten Referenzladedruck verglichen werden, und basierend auf dem Vergleichsergebnis Informationen über den Zustand des Turbomotors, insbesondere des Turboladers, ausgegeben werden.

Außerdem liegt eine Vorrichtung zum Testen eines Turbomotors, insbesondere eines Turboladers, in einem Kraftfahrzeug im Rahmen der Erfindung. Die Vorrichtung verfügt über eine Datenschnittstelle zum Motorsteuergerät für den Turbomotor und eine Steuereinrichtung, die derart eingerichtet ist, dass das Motorsteuergerät durch die Steuereinrichtung über die Datenschnittstelle in einen Testbetriebszustand schaltbar ist, in dem das Motorsteuergerät den Wirkungsgrad des Turbomotors im Stillstand des Kraftfahrzeuges derart verschlechtert, dass der Turbomotor im aufgeladenen Zustand betrieben wird, und dass auf dem gemessenen Ladedruck basierende Informationen, insbesondere der gemessene Ladedruck oder der Zustand des Turbomotors oder des Turboladers, vorzugsweise von dem Motorsteuergerät über die Datenschnittstelle durch die Steuereinrichtung empfangen werden.

Im Folgenden wird die Erfindung anhand von Beispielen unter Bezugnahme auf die folgende Figur näher erläutert:

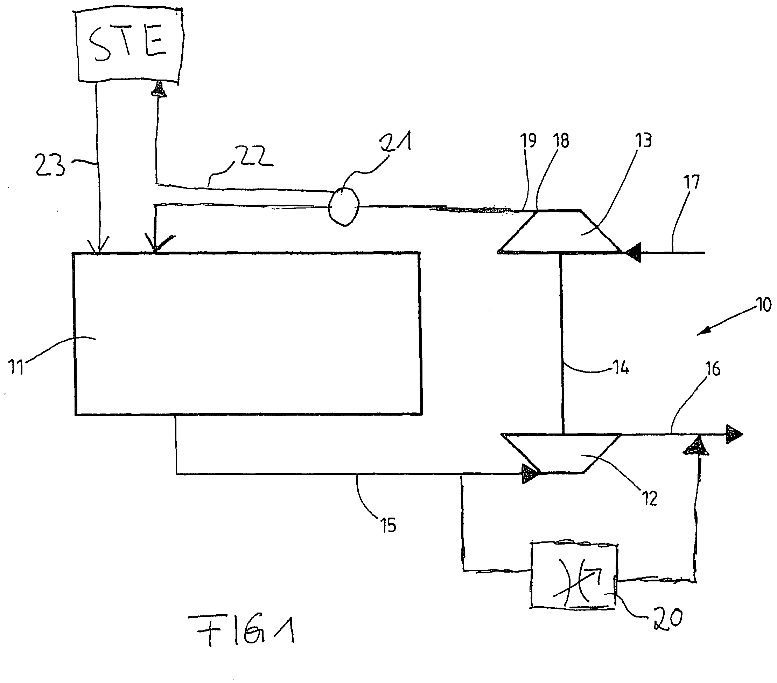

- Figur 1: zeigt eine vereinfachte Prinzipdarstellung eines Abgasturbomotors.

Die in Figur 1 dargestellte Prinzipdarstellung zeigt einen Abgasturbolader 10, der einem Verbrennungsmotor 11 zugeordnet ist.

Beim Verbrennungsmotor 11 kann es sich um einen Ottomotor oder um einen Dieselmotor handeln. Vorzugsweise wird ein Verbrennungsmotor 11 verwendet, der zusammen mit dem Abgasturbolader 10 in einem Kraftfahrzeug verbaut ist. Es wird also der Abgasturbolader 10 an dem Verbrennungsmotor 11 geprüft, mit dem der Abgasturbolader 10 auch betrieben wird. Der Abgasturbolader kann dabei auch als Bestandteil des Verbrennungsmotors betrachtet werden. Der Verbrennungsmotor kann als Turbomotor bezeichnet werden.

Der Abgasturbolader 10 weist eine Turbine 12 auf, die einen Verdichter 13 antreibt. Dazu ist der Verdichter 13 mit der Turbine 12 direkt gekoppelt, vorzugsweise über eine die Turbine 12 mit dem Verdichter 13 verbindende Antriebswelle 14.

Der Verbrennungsmotor 11 ist über eine Leitung 15 mit der Eingangsseite der Turbine 12 verbunden. Die Leitung 15 geht vom Abgastrakt des Verbrennungsmotors 11 aus. Vorzugsweise ist die Leitung 15 an den Abgaskrümmer des Verbrennungsmotors 11 angeschlossen.

Das zum Antrieb der Turbine 12 des zu prüfenden Abgasturboladers 10 dienende Abgas wird beim Antrieb der Turbine 12 entspannt und tritt über den Ausgang der Turbine 12 in die Abgasanlage. Dieser Austritt des in der Turbine 12 entspannten Abgases ist in der Zeichnung durch einen Pfeil 16 symbolisiert.

Der Verdichter 13 saugt an seiner Einlassseite Umgebungsluft an. Dieses ist durch einen Pfeil 17 in der Figur symbolisiert. Der von der Turbine 12 über die Antriebswelle 14 angetriebene Verdichter 13 verdichtet die angesaugte Luft. Die danach an einer Druckseite 18 den Verdichter 13 verlassende komprimierte Luft wird über eine von der Druckseite 18 des Verdichters 13 ausgehende Verbindungsleitung 19 über eine Drossel und ein Einlassventil (nicht dargestellt) in den Verbrennungsmotor 11 geleitet.

Zur Messung des Ladedrucks oder einer damit korrelierenden Größe ist in der Verbindungsleitung 19 ein Drucksensor 21 vorgesehen.

Zur Ladedruckregelung ist ein Bypassventil 20, auch Waste-Gate oder Überbrückungsleitung genannt, im Abgasstrom vorgesehen, um Abgas an der Turbine vorbei direkt in den Auspuff zu leiten, wodurch ein weiteres Ansteigen der Turbinendrehzahl verhindert werden kann. Basierend auf einem Abgleich zwischen Soll-Ladedruck und gemessenem Ist-Ladedruck wird dieses Ventil weiter geöffnet oder geschlossen, um den Soll-Ladedruck einzustellen.

Ein Steuergerät, insbesondere ein Motorsteuergerät und/oder ein Steuergerät STE eines kraftfahrzeugexternen Diagnosegerätes, empfängt über eine entsprechende Datenleitung 22 von dem Drucksensor 21 Informationen über den aktuellen Ladedruck und steuert über geeignete Steuerleitungen 23 direkt oder über weitere Steuergeräte den Verbrennungsmotor 11 an.

Zum Testen des Verbrennungsmotor 11, insbesondere des Abgasturboladers 12,13,14 in einem Kraftfahrzeug wird der Verbrennungsmotor 11 durch das Motorsteuergerät und/oder das Steuergerät STE im Stillstand des Kraftfahrzeuges derart angesteuert, dass der Wirkungsgrad des Verbrennungsmotors derart verschlechtert wird, dass der Verbrennungsmotor selbst bei Stillstand des Fahrzeuges im aufgeladenen Zustand betrieben wird. Dabei ist der Ladedruck vor der Drosselklappe deutlich größer als der Umgebungsdruck, um Fehlfunktionen des Abgasturboladers über die Messung des Ladedrucks sicher detektieren zu können. Das Waste-Gate ist dabei vorzugsweise geschlossen.

Basierend auf dem Vergleich zwischen gemessenem Ladedruck und abgespeichertem Referenzladedruck wird dann automatisch durch das Motorsteuergerät und/oder Steuergerät STE eine Aussage über den Zustand des Turbomotors, insbesondere des Turboladers, getroffen. Entsprechende Informationen können an einer Ausgabeeinrichtung (des Fahrzeuges oder des Diagnosegerätes) zur Ausgabe von Informationen ausgegeben werden.

Zur Verschlechterung des Wirkungsgrades des Turbomotors wird der Turbomotor derart angesteuert, dass (bei einem Ottomotor) die Zündung zeitlich nach dem optimalen oder normalen Zündzeitpunkt erfolgt, oder dass (bei einem Dieselmotor) die Kraftstoff-Einspritzung zeitlich nach dem optimalen oder normalen Einspritzzeitpunkt erfolgt.

Zudem wird der Turbomotor derart angesteuert, dass zur weiteren Erhöhung des Ladedrucks die Motordrehzahl gegenüber der Leerlaufdrehzahl erhöht wird.

Zum Schutz der Bauteile wird der Turbomotor derart angesteuert, dass mehr Kraftstoff in zumindest einen Brennraum des Turbomotors eingespritzt wird als zur Verbrennung benötigt wird. Unter anderem die resultierende Kraftstoffverdunstung sorgt für eine Kühlung beteiligter - durch die oben genannten Maßnahmen hoch erhitzter - Motorkomponenten. Zur weiteren Kühlung wird ausgelöst durch das Motorsteuergerät und/oder Steuergerät STE ein elektrischer Lüfter eingeschaltet.

Durch die Anforderung einer sehr hohen Momentenreserve wird im Motorleerlauf also ein hoher Luftmassen- und Kraftstoffmassenstrom erreicht. Durch sehr späte Zündung wird trotz des hohen Luftmassen- und Kraftstoffdurchsatzes das abgegebene Moment neutral gehalten. In diesem Zustand ist durch gezieltes Ansteuern der Waste-Gates bei einem funktionstüchtigen Turbolader eine deutlich messbare Änderung des Ladedrucks zu beobachten. Durch die sehr späten Zündwinkel wird ein Großteil der Verbrennungsenergie an das Abgas abgegeben. Dies erhöht auch den Energieeintrag in die Turbine und ist, neben dem hohen Massenstrom, die Grundlage zur Realisierung des Ladedrucks. Damit einhergehend steigt die Abgastemperatur bis zur Überschreitung der zulässigen Bauteilgrenztemperatur im Abgassystem. Eine Anfettung des Gemisches bis zu ca. lambda=0.8 bringt wirksamen Schutz vor Überhitzung. Zur Sicherung einer stabilen Verbrennung bei sehr späten Zündwinkeln wird der Test vorzugsweise mit Doppeleinspritzung gefahren.

Falls der Turbomotor zwei Turbolader aufweist, die, insbesondere deren Turbine, jeweils über eine Überbrückungsleitung (Waste-Gate) überbrückbar sind, werden die Überbrückungsleitungen durch das Motorsteuergerät und/oder Steuergerät STE derart angesteuert, dass eine erste Überbrückungsleitung geschlossen wird, und eine zweite Überbrückungsleitung geöffnet wird, um einen ersten Ladedruck (des ersten Turboladers) zu messen, und bei dem im Anschluss daran die erste Überbrückungsleitung geöffnet wird, und die zweite Überbrückungsleitung geschlossen wird, um einen zweiten Ladedruck (des zweiten Turboladers) zu messen. Basierend auf den beiden gemessenen Ladedrücken, die miteinander verglichen werden können oder jeweils mit einem abgespeicherten Referenzladedruck verglichen werden können, wird eine Aussage über den ersten Turbolader und den zweiten Turbolader getroffen. Durch selektives Schließen einzelner Waste-Gates und Messung der Änderung des Ladedrucks liefert diese Diagnosefunktion also eine Aussage über den Fehlerzustand des jeweiligen Abgasturboladers.

## Patentansprüche

1. Verfahren zum Testen eines Turbomotors (11,12,13,14), insbesondere eines Turboladers (12,13,14), in einem Kraftfahrzeug,
- bei dem im Stillstand des Kraftfahrzeuges der Wirkungsgrad des Turbomotors (11) derart verschlechtert wird, dass der Turbomotor (11) im aufgeladenen Zustand betrieben wird, und
- bei dem der Ladedruck gemessen wird.

2. Verfahren nach Anspruch 1,
bei dem basierend auf dem gemessenen Ladedruck eine Aussage über den Zustand des Turbomotors (11, 12, 13,14), insbesondere des Turboladers, getroffen wird.

3. Verfahren nach einem der vorhergehenden Ansprüche,
bei dem der gemessene Ladedruck mit einem abgespeicherten Referenzladedruck verglichen wird.

4. Verfahren nach einem der vorhergehenden Ansprüche
bei dem der Wirkungsgrad des Turbomotors (11, 12, 13,14) dadurch verschlechtert wird, dass die Zündung zeitlich nach dem optimalen oder normalen Zündzeitpunkt erfolgt.

5. Verfahren nach einem der vorhergehenden Ansprüche
bei dem der Wirkungsgrad des Turbomotors (11, 12, 13,14) dadurch verschlechtert wird, dass die Kraftstoff-Einspritzung zeitlich nach dem optimalen oder normalen Einspritzzeitpunkt erfolgt.

6. Verfahren nach einem der vorhergehenden Ansprüche
bei dem der Turbomotor (11, 12, 13,14) mit Mehrfach-Einspritzung betrieben wird.

7. Verfahren nach einem der vorhergehenden Ansprüche
bei dem die Motordrehzahl gegenüber der Leerlaufdrehzahl erhöht wird.

8. Verfahren nach einem der vorhergehenden Ansprüche
bei dem mehr Kraftstoff in zumindest einen Brennraum des Turbomotors (11) eingespritzt wird als zur Verbrennung benötigt wird.

9. Verfahren nach einem der vorhergehenden Ansprüche
bei dem ein elektrischer Lüfter eingeschaltet wird.

10. Verfahren nach einem der vorhergehenden Ansprüche,
bei dem der Turbomotor (11, 12, 13, 14) zwei Turbolader (12,13,14) aufweist,
die jeweils über eine Überbrückungsleitung (20) überbrückbar sind,
bei dem eine erste Überbrückungsleitung geschlossen wird, und eine zweite Überbrückungsleitung geöffnet wird, um einen ersten Ladedruck zu messen, und
bei dem die erste Überbrückungsleitung geöffnet wird, und die zweite Überbrückungsleitung geschlossen wird, um einen zweiten Ladedruck zu messen.

11. Kraftfahrzeug mit einem Turbomotor (11,12,13,14),
mit einer Druck-Erfassungseinrichtung (21) zum Messen des Ladedrucks,
mit einem Motorsteuergerät (STE), das derart eingerichtet ist,
dass in einem Testbetriebszustand der Wirkungsgrad des Turbomotors (11, 12, 13,14) im Stillstand des Kraftfahrzeuges derart verschlechtert wird, dass der Turbomotor (11, 12, 13,14) im aufgeladenen Zustand betrieben wird.

12. Kraftfahrzeug mit einem Turbomotor (11,12,13,14)
mit einer Ausgabeeinrichtung zur Ausgabe von Informationen, und
mit einer Steuereinrichtung (STE), die derart eingerichtet ist,
- dass auf dem gemessenen Ladedruck basierende Informationen an der Ausgabeeinrichtung ausgegeben werden.

13. Vorrichtung zum Testen eines Turbomotors, insbesondere eines Turboladers (11,12,13,14), in einem Kraftfahrzeug nach Anspruch 9 oder 10
- mit einer Datenschnittstelle zum Motorsteuergerät (STE) für den Turbomotor,
- mit einer Steuereinrichtung, die derart eingerichtet ist,
- dass das Motorsteuergerät (STE) durch die Steuereinrichtung über die Datenschnittstelle in einen Testbetriebszustand geschaltet wird, in dem das Motorsteuergerät den Wirkungsgrad des Turbomotors im Stillstand des Kraftfahrzeuges derart verschlechtert, dass der Turbomotor im aufgeladenen Zustand betrieben wird, und
- dass auf dem gemessenen Ladedruck basierende Informationen von dem Motorsteuergerät über die Datenschnittstelle empfangen werden.

## Claims

1. A method for testing a turbo engine (11, 12, 13, 14), more especially a turbocharger (12, 13, 14), in a motor vehicle,
- wherein, when the motor vehicle is at a standstill, the efficiency of the turbo engine (11) is impaired in such a way that the turbo engine (11) is operated in the charged state, and
- wherein the charge pressure is measured.

2. A method according to claim 1, wherein, based on the measured charge pressure, information is given about the state of the turbo engine (11, 12, 13, 14), more especially the turbocharger.

3. A method according to any of the preceding claims, wherein the measured charge pressure is compared with a stored reference charge pressure.

4. A method according to any of the preceding claims, wherein the efficiency of the turbo engine (11, 12, 13, 14) is impaired in that the ignition takes place temporally after the optimal or normal ignition time.

5. A method according to any of the preceding claims, wherein the efficiency of the turbo engine (11, 12, 13, 14) is impaired in that the fuel injection takes place temporally after the optimal or normal injection time.

6. A method according to any of the preceding claims, wherein the turbo engine (11, 12, 13, 14) is operated by multiple injection.

7. A method according to any of the preceding claims, wherein the engine speed is increased compared to the idling speed.

8. A method according to any of the preceding claims, wherein more fuel is injected into at least one combustion chamber of the turbo engine (11) than is required for combustion.

9. A method according to any of the preceding claims, wherein an electric fan is switched on.

10. A method according to any of the preceding claims, wherein the turbo engine (11, 12, 13, 14) has two turbochargers (12, 13, 14), which can in each case be bridged by a bridging line (20), wherein a first bridging line is closed, and a second bridging line is opened to measure a first charge pressure, and wherein the first bridging line is opened, and the second bridging line is closed to measure a second charge pressure.

11. A motor vehicle with a turbo engine (11, 12, 13, 14), with a pressure detection device (21) to measure the charge pressure, with an engine control apparatus (STE), which is set up in such a way that in a test operation state, the efficiency of the turbo engine (11, 12, 13, 14) when the motor vehicle is at a standstill is impaired in such a way that the turbo engine (11, 12, 13, 14) is operated in the charged state.

12. A motor vehicle with a turbo engine (11, 12, 13, 14) with an output device for outputting information, and with a control device (STE), which is set up in such a way
- that information based on the measured charge pressure is output at the output device.

13. A device for testing a turbo engine, more especially a turbocharger (11, 12, 13, 14) in a motor vehicle according to claim 9 or 10
- with a data interface to the engine control apparatus (STE) for the turbo engine,
- with a control device, which is set up in such a way,
- that the engine control apparatus (STE) is switched by the control device by means of the data interface to a test operation state, in which the engine control apparatus impairs the efficiency of the turbo engine when the motor vehicle is at a standstill in such a way that the turbo engine is operated in the charged state, and
- in that information based on the measured charge pressure is received from the engine control apparatus by means of the data interface.

## Revendications

1. Procédé permettant de tester un moteur turbo (11, 12, 13, 14), en particulier un turbocompresseur à suralimentation (12, 13, 14) d'un véhicule, selon lequel,
lorsque le véhicule est à l'arrêt, le degré d'efficacité du moteur turbo (11) est dégradé de sorte qu'il soit actionné à l'état suralimenté, et
la pression d'admission est mesurée.

2. Procédé conforme à la revendication 1,
selon lequel sur le fondement de la pression d'admission mesurée on se prononce sur l'état du moteur turbo (11, 12, 13, 14) et en particulier du turbocompresseur à suralimentation.

3. Procédé conforme à l'une des revendications précédentes,
selon lequel la pression d'admission mesurée est comparée à une pression d'admission de référence enregistrée.

4. Procédé conforme à l'une des revendications précédentes,
selon lequel le degré d'efficacité du moteur turbo (11, 12, 13, 14) est dégradé de sorte que l'allumage se produise chronologiquement après l'instant d'allumage optimum ou normal.

5. Procédé conforme à l'une des revendications précédentes,
selon lequel le degré d'efficacité du moteur turbo (11, 12, 13, 14) est dégradé de sorte que l'injection de carburant se produise chronologiquement après l'instant d'injection optimum ou normal.

6. Procédé conforme à l'une des revendications précédentes,
selon lequel le moteur turbo (11, 12, 13, 14) fonctionne avec des injections multiples.

7. Procédé conforme à l'une des revendications précédentes,
selon lequel la vitesse de rotation du moteur est augmentée par rapport à la vitesse de rotation en marche à vide.

8. Procédé conforme à l'une des revendications précédentes,
selon lequel une plus grande quantité de carburant est injectée dans au moins une chambre de combustion du moteur turbo (11) que celle nécessaire à la combustion.

9. Procédé conforme à l'une des revendications précédentes,
selon lequel une soufflante électrique est branchée.

10. Procédé conforme à l'une des revendications précédentes,
selon lequel le moteur turbo (11, 12, 13, 14) comporte deux turbocompresseurs à suralimentation (12, 13, 14) dont on peut respectivement effectuer le pontage par l'intermédiaire d'une conduite de pontage (20), une première conduite de pontage étant fermée et une seconde conduite de pontage étant ouverte pour mesurer une première pression d'admission, et
la première conduite de pontage étant ouverte et la seconde conduite de pontage étant fermée pour mesurer une seconde pression d'admission.

11. Véhicule à moteur turbo (11, 12, 13, 14) équipé d'un dispositif de détection de pression (21) permettant de mesurer la pression d'admission et d'un appareil de commande de moteur (STE) qui est réalisé de sorte que, dans un état de fonctionnement test, le degré d'efficacité du moteur turbo (11, 12, 13, 14) soit dégradé lorsque le véhicule est à l'état de repos, pour que le moteur turbo (11, 12, 13, 14) soit actionné à l'état suralimenté.

12. Véhicule à moteur turbo (11, 12, 13, 14) équipé d'un dispositif permettant de délivrer des informations et d'un dispositif de commande (STE) qui est réalisé de sorte que des informations fondées sur la pression d'admission mesurée puissent être délivrées au dispositif de délivrance d'information.

13. Dispositif permettant de tester un moteur turbo, en particulier turbocompresseur de suralimentation (11, 12, 13, 14) d'un véhicule conforme à la revendication 9 ou 10 comprenant :
- une interface de données avec l'appareil de commande (STE) du moteur turbo,
- un dispositif de commande réalisé de sorte que
- l'appareil de commande du moteur (STE) puisse être branché par le dispositif de commande, par l'intermédiaire de l'interface de données dans un état de fonctionnement test dans lequel l'appareil de commande du moteur dégrade le degré d'efficacité du moteur turbo lorsque le véhicule est à l'arrêt pour que le moteur turbo fonctionne à l'état suralimenté, et
- des informations basées sur la pression d'admission mesurée soient reçues par l'appareil de commande du moteur par l'intermédiaire de l'interface de données.
